# EUROPÄISCHE PATENTSCHRIFT

(11) **EP 3 013 601 B1**
(45) Veröffentlichungstag und Bekanntmachung des Hinweises auf die Patenterteilung: **14.06.2017**
(21) Anmeldenummer: 14738762.5
(22) Anmeldetag: 27.06.2014
(51) Int. Cl.: B60B 35/00, B60G 9/00

(54) **SCHALE**
WRAP
COQUE

(30) Priorität: 28.06.2013 DE 102013212545
(43) Veröffentlichungstag der Anmeldung: 04.05.2016
(73) Patentinhaber: SAF-HOLLAND GmbH, 63856 Bessenbach (DE)
(72) Erfinder: SPIELMANN, Rolf, 97877 Wertheim-Bettingen (DE); JANSEN, Roger III, Holton, Michigan 49425 (US)
(74) Vertreter: Müller Schupfner & Partner Patent- und Rechtsanwaltspartnerschaft mbB
(86) Internationale Anmeldenummer: PCT/EP2014/063677
(87) Internationale Veröffentlichungsnummer: WO 2014/207191

(56) Entgegenhaltungen:
- EP-A2- 0 830 957
- WO-A2-2008/046488
- US-A- 3 154 300
- US-A- 6 032 967

## Beschreibung

Die vorliegende Erfindung betrifft eine Schale zur Anbindung eines Längslenkers an ein Achsrohr, ein Verfahren zur Herstellung eines Längslenker-Achsrohrverbundes sowie einen Längslenker für ein Achsrohr.

Derartige Schalen, schon bekannt aus der US 3 154 300 A, sowie aus der EP 0 830 957 A2 und aus der US 6 032 967 A, auch Wraps genannt, werden in der Regel bei Fahrzeugachsen, insbesondere bei Starrachsen (gelenkt oder ungelenkt) eingesetzt. Derartige Fahrzeugachsen bestehen in der Regel aus einem Achsrohr und zwei Längslenkern, welche die Verbindung mit einem Fahrzeugrahmen oder Chassis darstellen. Die Schalen ermöglichen, dass die Längslenker nicht direkt auf das Achsrohr geschweißt werden müssen, was deren Haltbarkeit negativ beeinflussen würde. Stattdessen werden die Längslenker auf die Schalen geschweißt, welche wiederum mit dem Achsrohr verbunden werden. Problematisch dabei ist, dass die Achsrohre bzw. deren Außendurchmesser fertigungsbedingt gewissen Toleranzen unterlegen sind. Somit kann nicht sichergestellt sein, dass die Schalen beispielsweise ideal formschlüssig auf den Achsrohren anordenbar sind. Um dennoch einen ausreichenden Sitz der Schalen auf dem Achsrohr zu ermöglichen, müssen die Schalen bzw. die Achsrohre nachgearbeitet werden bzw. es müssen unterschiedliche Schalen mit unterschiedlichen Innendurchmessern vorgehalten werden. Wichtig ist außerdem, dass beim Verschweißen der Schalen selbst kein oder nur ein geringer Wärmeeintrag in das Achsrohr hinein stattfindet.

Es ist daher Aufgabe der vorliegenden Erfindung, eine Schale zur Anbindung eines Längslenkers an ein Achsrohr, Verfahren zur Herstellung eines Längslenker-Achsrohrverbundes sowie einen Längslenker für eine Fahrzeugachse bereitzustellen, welche spaltfrei an unterschiedlichen Achsrohrdurchmessern anordenbar sind und welche einen Wärmeeintrag beim Verschweißen der Schale in das Achsrohr hinein minimieren.

Diese Aufgabe wird gelöst durch eine Schale zur Anbindung eines Längslenkers an ein Achsrohr gemäß Anspruch 1, durch Verfahren zur Herstellung eines Längslenker-Achsrohrverbundes gemäß den Ansprüchen 11 und 13 und durch einen Längslenker für eine Fahrzeugachse gemäß Anspruch 15. Weitere Vorteile und Merkmale der Erfindung ergeben sich aus den Unteransprüchen sowie der Beschreibung und den beigefügten Figuren.

Erfindungsgemäß weist eine Schale zur Anbindung eines Längslenkers an ein Achsrohr einen im Wesentlichen rohrförmigen Querschnitt auf, welcher sich entlang einer Längsachse erstreckt, und welcher eine Außenkontur und eine Innenkontur aufweist, wobei die Innenkontur einen Innendurchmesser aufweist und wobei die Schale zumindest einen Ausgleichsabschnitt aufweist, welcher sich im Wesentlichen entlang der Längsachse erstreckt und wobei der zumindest eine Ausgleichsabschnitt ausgelegt ist, durch unterschiedliche Einstellungen den Innendurchmesser zu verändern. Achsen bzw. Starrachsen, sowohl gelenkt als auch ungelenkt, bestehen heutzutage in der Regel aus fünf Bauteilen, nämlich einem Achsrohr, je einem linken und einem rechten Achsstummel und den Schalen. Eine derartige Achse ist in der Regel über zwei Längslenker bzw. Funktionslenker mit dem Fahrzeugrahmen bzw. mit dem Chassis schwenkbar verbunden. Längslenker bzw. Funktionslenker (im Folgenden ausschließlich Längslenker genannt) sind im Wesentlichen entlang der Fahrtrichtung orientiert. Das Achsrohr, entlang dessen sich die Längsachse orientiert, ist im Wesentlichen quer zu den Längslenkern bzw. der Fahrtrichtung an den Längslenkern bzw. in diesen angeordnet. Dabei erfolgt die Anordnung bevorzugt nicht unmittelbar sondern mittelbar über die Schalen. Mit Vorteil ist also auf dem Achsrohr an einer entsprechenden Position die Schale angeordnet, während auf der Schale der Längslenker befestigt ist. Die Längslenker werden bevorzugt umlaufend mit den Schalen verschweißt, welche wiederum vorteilhafterweise über seitlich angeordnete Verschweißungen mit dem Achsrohr verbunden sind. Ebenfalls kann die Schale integraler Bestandteil des Längslenkers sein, indem Längslenker und Schale beispielsweise durch einen einzigen Gußkörper ausgebildet sind. Vorteilhafterweise bildet der Längslenker also die Schale oder eine entsprechende Aufnahme aus, die für die Anordnung und Befestigung eines Achsrohrs ausgelegt ist. Dabei können die Schale oder die Aufnahme ein Teil des Längslenkers sein, welches bereits bei der Herstellung ausgeformt wird, wie z. B. bei dem oben angesprochenen Gusskörper. Ebenfalls bevorzugt kann der Längslenker aber auch form- und/oder kraft- und/oder stoffschlüssig mit der Schale bzw. der Aufnahme verbunden sein und damit sozusagen "nachträglich" ein integraler Bestandteil des Längslenkers werden. Sämtliche Vorteile und Merkmale der Schale gelten in gleicher Weise für die Aufnahme und umgekehrt. Um Wiederholungen zu vermeiden wird nachfolgend lediglich der Begriff "Schale" verwendet. Besonders bevorzugt wird zur Befestigung der Schale an dem Achsrohr eine Lochschweißung verwendet. Hierzu weist die Schale in einer bevorzugten Ausführungsform vorteilhafterweise in seinem Umfang zumindest ein Loch auf, welches in eingebauten Zustand des Achsrohrs bevorzugt an einer Oberseite und/oder an einer Unterseite der Schale positioniert ist. Der bzw. die Längslenker werden auf die derart angeordnete(n) bzw. festgelegte(n) Schale(n) fixiert. Mit Vorteil ist es dadurch möglich, dass die umlaufende Schweißnaht, mit welcher der Längslenker befestigt ist, nicht direkt auf dem Achsrohr ausgeführt werden muss. Eine solche Ausführung würde aufgrund der Kerbwirkung und aufgrund des Wärmeinflusses der Schweißnaht zu einer Schwächung des Achsrohres und somit gegebenenfalls zum Achsrohrbruch im Feldeinsatz führen. Bevorzugt finden sich also die auf der Achse ausgeführten Verschweißungen, welche zur Befestigung der Schale auf dem Achsrohr dienen, jeweils im Bereich der vertikalen Ebene in Fahrstellung der Achse. Die Verwendung der Schalen bringt im Wesentlichen zwei Vorteile mit sich: Zum einen eine Verlagerung der Schweißnaht auf dem Achsrohr in einen unkritischen Bereich und zum anderen eine Verstärkung des Achsrohres im Bereich der Schweißnaht. Um eine möglichst große Haltbarkeit des Achsrohres bzw. der Verbindung der Längslenker mit dem Achsrohr bzw. den Schalen zu ermöglichen, sollte eine Umschlingung der Schale um das Achsrohr voll und spaltfrei sein. Aus dem Stand der Technik bekannte Schalen, die das Achsrohr umschließen, müssen unterschiedliche Umfänge bzw. Durchmesser aufweisen, um die auftretenden unterschiedlichen Achsrohrdurchmesser spaltfrei zu bedienen. Im Gegensatz dazu ist die erfindungsgemäße Schale, welche den zumindest einen Ausgleichsabschnitt aufweist, ausgelegt, durch unterschiedliche Einstellungen den Innendurchmesser zu verändern. Vorteilhafterweise ist die Schale mittels des Ausgleichsabschnitts ausgelegt, durch eine Einstellkraft, die im Wesentlichen entlang der Umfangsrichtung der Schale gerichtet ist, den Innendurchmesser zu verändern. Mit Vorteil bewirkt die Einstellkraft sozusagen ein Zusammendrücken der Schale, so dass der Innendurchmesser der Schale weitestgehend über seinen gesamten Umfang und die gesamte Länge der Schale, welche sich im Wesentlichen entlang des Achsrohres bemisst, an den Außendurchmesser des Achsrohres bzw. an das Achsrohr angepasst ist. Vorteilhafterweise wird die Schale, nachdem deren Innendurchmesser optimal an den Außendurchmesser des Achsrohres angepasst wurde arretiert, insbesondere zum Beispiel verschweißt oder dergleichen. Bevorzugt erstreckt sich dabei der Ausgleichsabschnitt über die ganze Länge der Schale. Er kann dabei, muss aber nicht, achsparallel angeordnet sein. Weiterhin bevorzugt ist im Bereich des Ausgleichsabschnitts in einer radialen Richtung zwischen der Außenkontur und der Innenkontur ein Grenzbereich vorgesehen. Hierbei ermöglicht der Grenzbereich, dass die Schale, welche zum Beispiel im Bereich des Ausgleichsabschnitts verschweißt wird, verhindert, dass beispielsweise Schmelzgut in Richtung der Innenkontur der Schale und damit in Richtung des Achsrohrs fließen kann. Der Grenzbereich stellt sozusagen eine Sperre bzw. eine Dichtung für jegliche eingesetzte Fügemittel dar, die zum Arretieren der Schale verwendet werden. Daneben wirkt der Grenzbereich auch als Wärmesperre und verhindert damit einen schädlichen und hohen Wärmeeintrag in das Achsrohr. Der Grenzbereich kann mit Vorteil auch ähnlich einer Labyrinthdichtung ausgebildet sein. Er muss also nicht "geschlossen" sein, sondern lediglich derart dimensioniert sein, dass beispielsweise das Schweißbad nicht von der Außenkontur zur Innenkontur vordringen kann. Der Grenzbereich wirkt mit Vorteil in radialer und/oder in axialer Richtung und/oder im Wesentlichen in Umfangsrichtung. Mit Vorteil wird durch die Verwendung der Schale eine schädliche Kerbwirkung auf dem Achsrohr vermieden. Mit anderen Worten ist also die Schale ausgelegt, zwei Zustände auszubilden. Die Zustände sind dahingehend definiert, dass der Innendurchmesser der Schale in einem ersten Zustand unterschiedlich zu einem Innendurchmesser in einem zweiten Zustand ist. Mit Vorteil ist im zweiten Zustand der Innendurchmesser kleiner als im ersten Zustand, er kann aber auch größer sein.

Mit Vorteil ist die Schale in einer Umfangsrichtung und/oder quer dazu bei unterschiedlich eingestellten Innendurchmessern zumindest bereichsweise im Wesentlichen spaltfrei ausgebildet. Insbesondere ist damit der Bereich der Schale gemeint, an welchen die Schale z. B. verschweißt wird. Insbesondere ist also die Spaltfreiheit im Bereich des Ausgleichsabschnitts gemeint. Mit anderen Worten gibt es in Umfangsrichtung der Schale und radial dazu bevorzugterweise immer zumindest einen Bereich, in welchem die Schale durchgängig gestaltet ist. Dabei bedeutet "durchgängig", dass, wenn die Schale z. B. eine Trennfuge aufweist, die dabei gebildeten Endabschnitte sich zumindest abschnittweise kontaktieren oder derart nahe aneinanderliegen, dass der Bereich die Funktion des Grenzbereichs übernehmen kann.

Bevorzugterweise ist der Ausgleichsabschnitt durch jeweils zumindest einen Innenspalt, welcher an der Innenkontur angeordnet ist und/oder einen Außenspalt, welcher an der Außenkontur angeordnet ist, ausgelegt, den Innendurchmesser zu verändern. Der Ausgleichsabschnitt umfasst also bevorzugt zumindest einen Innenspalt und/oder zumindest einen Außenspalt. Der an der Außenkontur angeordneter Außenspalt erstreckt sich von der Außenkontur im Wesentlichen radial in Richtung der Innenkontur. Dementsprechend erstreckt sich der an der Innenkontur angeordnete Innenspalt von der Innenkontur radial in Richtung der Außenkontur. Bevorzugt erstrecken sich der Innenspalt und/oder der Außenspalt, oder zusammenfassend auch "die Spalte", im Wesentlichen entlang der Längsachse der Schale. Eine Höhe des Innenspalts oder des Außenspalts, welche sich in radialer Richtung der Schale bemisst, nimmt bevorzugt die Hälfte bis ein Sechstel einer Dicke der Schale in diesem Bereich ein. Der Innenspalt und der Außenspalt können aber bevorzugt auch derart ineinander übergehen, dass sozusagen ein (durchgehender) Spalt gebildet ist. Der Spalt erstreckt sich dann mit Vorteil durchgehend zwischen der Außenkontur und der Innenkontur. Durch den durchgehenden Spalt wird eine Trennfuge gebildet.

Weiter bevorzugt weisen die Spalte (der Innenspalt, der Außenspalt und/oder auch der durchgehende Spalt) im Wesentlichen entlang der Umfangsrichtung der Schale Spaltbreiten auf, wobei über eine Veränderung der Spaltbreiten (oder der Spaltbreite) der Innendurchmesser veränderbar ist. Bevorzugt sind die Spaltbreite(n) über die Einstellkraft veränderbar. Im zweiten Zustand der Schale sind die Spaltbreiten, bzw. ist zumindest eine Spaltbreite, bevorzugt kleiner als im zweiten Zustand. Falls die Schale aufgeweitet wird, können die Spaltbreiten, bzw. kann zumindest eine Spaltbreite, im zweiten Zustand auch größer sein. Entlang der Höhe der Spalte muss die Spaltbreite dabei nicht konstant sein.

Bevorzugt entspricht die Spaltbreite des zumindest einen Außenspalts im Wesentlichen der Spaltbreite des zumindest einen Innenspalts. Besonders bevorzugt sind an der Innenkontur zwei Innenspalte angeordnet. Es können aber in Umfangsrichtung der Schale auch drei, vier, fünf, sechs, sieben und mehr Spalte angeordnet sein. Besonders bevorzugt ist an der Außenkontur ein Außenspalt angeordnet. Es können in Umfangsrichtung der Schale aber auch zwei, drei, vier, fünf, sechs, sieben oder mehr Spalte angeordnet sein. Von Vorteil ist es dabei, dass die Summe der Spaltbreiten der Innenspalte in Summe etwa den Spaltbreiten der an der Außenkontur angeordneten Außenspalte entspricht. Zwei in Umfangsrichtung aufeinanderfolgende Spalte werden bevorzugt über im Folgenden noch genauer beschriebene Stege und/oder ggf. auch Zwischenbereiche getrennt.

Bevorzugterweise weist der Ausgleichsabschnitt zumindest eine Trennfuge auf, welche sich im Wesentlichen entlang der Längsachse erstreckt und welche zumindest zwei Endabschnitte an der Schale formt. Die Endabschnitte erstrecken sich, der Trennfuge folgend, ebenfalls im Wesentlichen entlang der Längsachse der Schale. Dabei ist entscheidend, dass in der bevorzugten Ausführungsform der Schale diese nicht derart getrennt ist, dass zwei Hälften entstehen. Die Trennfuge ist lediglich derart ausgebildet, dass die Schale umfänglich zumindest bereichsweise getrennt ist. Die Endabschnitte können sich berühren. Berühren sie sich nicht, wird ein durchgehender Spalt gebildet.

Mit Vorteil weist der Ausgleichsabschnitt bzw. jeder Endabschnitt zumindest einen Vorsprung auf, welcher sich im Wesentlichen entlang der Umfangsrichtung der Schale erstreckt und wobei zumindest zwei Vorsprünge derart ineinander greifen, dass der Innenspalt und der Außenspalt ausgebildet sind. Bevorzugt greifen also zwei Vorsprünge zumindest bereichsweise im Wesentlichen formschlüssig ineinander. Dabei sind die Vorsprünge mit Vorteil derart arrangiert, dass die Vorsprünge mit der Innenkontur bzw. mit der Außenkontur jeweils zumindest einen Spalt bilden. Durch ein Zusammendrücken der Schale entsteht durch die Spalte nun die Möglichkeit, den Innendurchmesser zu verändern. Die Vorsprünge greifen dabei mit Vorteil derart ineinander, dass die Schale zumindest bereichsweise im Wesentlichen spaltfrei ausgebildet ist. Auf diese Weise wird der bereits beschriebene Grenzbereich gebildet, welcher ermöglicht, dass zwischen der Außenkontur und der Innenkontur der Schale eine Barriere geschaffen wird. Mit Vorteil ist in Umfangsrichtung eine Beweglichkeit der Vorsprünge zueinander ermöglicht, welche die Spaltbreiten verändert, worüber letztendlich der Innendurchmesser einstellbar ist, während gleichzeitig die Vorsprünge derart ineinander greifen, dass ein Grenzbereich gebildet ist.

Bevorzugt ist der Grenzbereich als im Wesentlichen radial verlaufender Abschnitt ausgebildet, welcher im Wesentlichen parallel zur Innenkontur und zur Außenkontur angeordnet ist. Ebenfalls bevorzugt kann der Grenzbereich durch die Vorsprünge auch schräg also gerade nicht parallel zur Innen- bzw. Außenkontur angeordnet sein. Es versteht sich, dass auch drei, vier, fünf, sechs oder mehr Vorsprünge an jedem Endabschnitt angeordnet sein können. Vorab wurde bereits beschrieben, dass bei einer bevorzugten Ausführungsform die Schale durch Zusammendrücken auf den Achsrohrdurchmesser angepasst und dann entsprechend z. B. verschweißt wird. Alternativ bevorzugt kann die Schale auch derart dimensioniert sein, dass sie zum Beispiel beim Aufschieben auf das Achsrohr automatisch durch dieses auf den idealen Innendurchmesser aufgeweitet wird. Es muss also gerade keine Einstellkraft verwendet werden. Dies wird dadurch ermöglicht, dass die Vorsprünge ineinander, also in Umfangsrichtung, verlagerbar sind. Bei der gerade beschriebenen bevorzugten Ausführungsform werden gegebenenfalls also beim Aufschieben der Schale auf das Achsrohr der Spalt bzw. die Spalte vergrößert, wodurch letztendlich der Innendurchmesser der Schale vergrößert wird. Bevorzugt wird dann die Schale entlang des Spalts an der Außenkontur verschweißt, wobei das Schweißbad nicht zur Innenkontur vordringen kann. Mit Vorteil ist der Grenzbereich im zweiten Zustand enger bzw. dichter ausgebildet als im ersten Zustand.

Bevorzugt bildet der Ausgleichsabschnitt an der Innenkontur und/oder an der Außenkontur zumindest einen Steg aus, wobei eine Breite des zumindest einen Stegs in Umfangsrichtung bevorzugt im Wesentlichen einer Spaltbreite eines in Umfangsrichtung neben dem zumindest einen Steg angeordneten Spalts entspricht. Der Ausgleichsabschnitt weist also zweckmäßigerweise zumindest einen Steg auf, bevorzugt aber nicht zwingend an der Innenkontur und/oder an der Außenkontur. Bevorzugt ist an beiden Endabschnitten ein derartiger Steg ausgebildet. Die Stege sind derart zueinander hin orientiert, dass beim Zusammendrücken der Schale (in Umfangsrichtung), also beim Einstellen des Innendurchmessers, die Stege in die jeweils angrenzenden Spalte hineingedrückt werden. Mit anderen Worten sind die Stege also derart ausgelegt, dass sie plastisch verformbar sind, wodurch der Innendurchmesser der Schale einstellbar ist. Vorteilhafterweise ist im zweiten Zustand zumindest ein Steg in zumindest einen angrenzenden Spalt stärker hinein verlagert als im ersten Zustand. Zweckmäßigerweise ist der Ausgleichsabschnitt im zweiten Zustand zumindest teilweise plastisch verformt.

Vorteilhafterweise ist der zumindest eine Steg in Umfangsrichtung angrenzend an den Innenspalt oder den Außenspalt angeordnet, wobei der zumindest eine Steg zudem in radialer Richtung angrenzend an den Spalt der jeweils gegenüberliegenden Kontur angeordnet ist. Besonders bevorzugt sind an der Innenkontur zwei Stege mit jeweils angrenzenden Spalten ausgebildet, wobei im Wesentlichen radial zu den beiden Stegen ein Spalt an der Außenkontur gebildet ist. Vorteilhafterweise begrenzen die zwei Stege an der Innenkontur in einer radialen Richtung zur Innenkontur hin gesehen den Spalt an der Außenkontur. Bevorzugt entspricht die Spaltbreite des Spalts an der Außenkontur im Wesentlichen der Summe der Spaltbreiten der Spalte an der Innenkontur. Mit Vorteil ist dadurch die Schale sozusagen voll verschließbar, in dem sie, wie bereits beschrieben, zusammengedrückt wird. Ist also bei der Schale der kleinste Innendurchmesser eingestellt, so sind vorteilhafterweise keine Spalte mehr vorhanden. In der bevorzugten Ausführungsform erstreckt sich also der Spalt an der Außenkontur in Richtung der Innenkontur, wobei er in die Trennfuge übergeht und wobei in Umfangsrichtung der Schale gesehen zu beiden Seiten der Trennfuge die Stege angeordnet sind neben welchen wiederum jeweils ein Spalt angeordnet ist.

Bevorzugt ist zwischen zwei Innenspalten und/oder zwischen zwei Außenspalten ein Zwischenbereich ausgebildet. Der Ausgleichsabschnitt weist also zweckmäßigerweise zumindest einen Zwischenbereich auf. Mit Vorteil entspricht eine Breite des Zwischenbereichs in Umfangsrichtung im Wesentlichen einer Summe der Spaltbreiten der angrenzenden Spalte in dieser Richtung. Bevorzugterweise ist der Zwischenbereich in Gestalt der bereits beschriebenen zwei Stege geformt, allerdings weist der Zwischenbereich explizit keine Trennfuge auf. Die Schale ist also im Bereich des oder der Ausgleichsabschnitte komplett durchgehend gestaltet. Durch die Verformbarkeit des Zwischenbereichs, welche eine plastische Verformung ermöglicht, ist dieser zum Beispiel beim Zusammendrücken der Schale sozusagen in die angrenzende Spalte hinein verformbar bzw. verlagerbar, wodurch der Innendurchmesser einstellbar ist. Bevorzugterweise begrenzen also zwei Stege oder der Zwischenbereich an der Innenkontur oder an der Außenkontur einen Spalt an der gegenüberliegenden Kontur. Besonders bevorzugt ist der Zwischenbereich an der Innenkontur ausgebildet. In einer Ausführungsform kann der Zwischenbereich auch zwischen einem Außenspalt und einem Innenspalt angeordnet sein. Zweckmäßigerweise sind der Außenspalt und der Innenspalt in radialer Richtung versetzt zueinander angeordnet und durch den Zwischenbereich verbunden.

Erfindungsgemäß umfasst ein Verfahren zur Herstellung eines Längslenker-Achsrohrverbundes die Schritte:
- Bereitstellen einer Schale;
- Bereitstellen eines Achsrohrs;
- Bereitstellen eines Längslenkers;
- Aufschieben der Schale auf das Achsrohr zum Positionieren der Schale entlang einer Längsrichtung des Achsrohrs;
- Betätigen zumindest eines Ausgleichsabschnitts der Schale durch eine Einstellkraft, welche im Wesentlichen entlang einer Umfangsrichtung der Schale gerichtet ist und Anpassen eines Innendurchmessers der Schale an einen Außendurchmesser des Achsrohrs dadurch;
- Verschweißen der Schale entlang des zumindest einen Ausgleichsabschnitts;
- Verschweißen der Schale mit dem Achsrohr.
Schließlich umfasst das Verfahren vorzugsweise auch den Schritt, wonach der Längslenker auf der Schale positioniert und mit ihr verschweißt wird.

Bevorzugt umfasst das Verfahren zusätzlich die Schritte:
- Drehen der Schale, bis ein Loch der Schale in einer vertikalen Richtung auf dem Achsrohr angeordnet ist;
- Verschweißen der Schale entlang eines Außenspalts der Schale;
- Verschweißen der Schale mit dem Achsrohr zumindest bereichsweise entlang einer Innenkontur des Lochs der Schale;
- Positionieren des Längslenkers auf der Schale.

Erfindungsgemäß umfasst ein Verfahren zur Herstellung eines Längslenker-Achsrohrverbundes die Schritte:
- Bereitstellen einer Schale;
- Bereitstellen eines Achsrohrs;
- Bereitstellen eines Längslenkers;
- Betätigen zumindest eines Ausgleichsabschnitts der Schale durch Positionieren der Schale auf dem Achsrohr;
- Verschweißen der Schale entlang des zumindest einen Ausgleichsabschnitts;
- Verschweißen der Schale mit dem Achsrohr.
Zweckmäßigerweise ist ein Innendurchmesser der Schale geringfügig kleiner als ein Außendurchmesser des Achsrohrs, so dass beim Positionieren der Schale auf dem Achsrohr der zumindest eine Ausgleichsabschnitt betätigt wird. Mit anderen Worten wird also die Schale geringfügig aufgeweitet und so auf den idealen Innendurchmesser eingestellt. Das Verfahren umfasst zweckmäßigerweise auch den Schritt, wonach der Längslenker auf der Schale positioniert und mit ihr verschweißt wird.

Bevorzugt umfasst das Verfahren zusätzlich den Schritt:
- Anordnen der Schale in einer Aufnahme des Längslenkers.
Durch die Aufnahme der Schale in der Aufnahme des Längslenkers kann mit Vorteil eine erste Anpassung des Innendurchmessers der Schale erfolgen. Vorteilhafterweise ist also der Innendurchmesser der Schale nicht nur an einen Außendurchmesser des Achsrohrs anpassbar, es ist auch ein Außendurchmesser der Schale an einen Innendurchmesser der Aufnahme des Längslenkers anpassbar. Mit Vorteil wird der Längslenker, nachdem die Schale in der Aufnahme positioniert ist, auf das Achsrohr geschoben und positioniert.

Die Merkmale und Vorteile der Schale gelten in gleicher Weise für die genannten Verfahren und umgekehrt.

Erfindungsgemäß weist ein Längslenker für eine Fahrzeugsachse eine Aufnahme, insbesondere für ein Achsrohr, auf, wobei die Aufnahme einen Innendurchmesser aufweist, und wobei die Aufnahme zumindest einen Ausgleichsabschnitt aufweist, und wobei der zumindest eine Ausgleichsabschnitt ausgelegt ist, durch unterschiedliche Einstellungen den Innendurchmesser zu verändern. Bevorzugt, aber nicht zwingend, erstreckt sich der Ausgleichsabschnitt im Wesentlichen entlang einer Längachse, welche sich etwa quer zu einer Längserstreckung des Längslenkers erstreckt. Die erfindungsgemäße Aufnahme kann in gleicher Weise die Funktionen der erfindungsgemäßen Schale erfüllen. Es versteht sich daher, dass sämtliche Vorteile und Merkmale der Schale auch auf die Aufnahme übertragbar sind, und umgekehrt. Dies gilt insbesondere für die Merkmale, Vorteile und Möglichkeiten der Ausgestaltung und Anordnung des Ausgleichsabschnitts. Die Schale ist bei dem Längslenker der in Rede stehenden Art sozusagen in den Längslenker integriert und bildet damit sozusagen die Aufnahme. Vorteilhafterweise kann damit z. B. eine stoffschlüssige Verbindung zwischen Schale und Längslenker entfallen, die aufgrund der auftretenden Temperaturen oft eine Materialermüdung mit sich bringt. Durch die Integration der Aufnahme in den Längslenker ergeben sich mit Vorteil sehr viele Möglichkeiten für die Ausgestaltung der Aufnahme. Mit Vorteil ist die Aufnahme z. B. durch zwei im Wesentlichen parallel verlaufende und in Umfangsrichtung umlaufende Träger gebildet. Quer zu den Trägern, also in Richtung des Achsrohrs, sind die Träger durch zumindest einen Querträger verbunden, wobei der Querträger den Ausgleichsabschnitt aufweist. Bevorzugt sind die Träger insbesondere durch zwei Querträger verbunden, welche jeweils den Ausgleichsabschnitt aufweisen, und welche quer zur Längsrichtung des Achsrohrs gesehen im Wesentlichen gegenüberliegend angeordnet sind. Dadurch, dass die Aufnahme zwei Ausgleichsabschnitte aufweist, wobei jeder der Ausgleichsabschnitte mit Vorteil eine Trennfuge aufweist, ist der Längslenker im Bereich der Aufnahme sozusagen zweigeteilt, was zweckmäßigerweise eine sehr leichte Montage an das Achsrohr ermöglicht, da dieses nicht aufwendig in die Aufnahme eingeschoben werden muss. Der Längslenker wird bevorzugt direkt an das Achsrohr geschweißt, beispielsweise über Punktschweißen. Auch hier gelten insbesondere wieder die bereits genannten Vorteile, die im Zusammenhang mit der Befestigung der Schale auf dem Achsrohr genannt wurden. Zweckmäßigerweise handelt es sich bei dem Längslenker, der die Aufnahme aufweist, um ein Gussteil oder ein geschmiedetes Teil. Ebenfalls bevorzugt kann der Längslenker, der die Aufnahme aufweist, aus einem Kunststoff oder Verbundwerkstoff (bevorzugt mit Kohlefasern) oder auch aus Kombinationen der genannten Materialien gefertigt sein. Dabei sind mit Vorteil die Aufnahme und der Längslenker immer als ein Teil ausgebildet. Vorteilhafterweise ist die Aufnahme derart ausgestaltet, dass sie das Achsrohr in Umfangsrichtung und/oder auch quer dazu zumindest teilweise derart umschließt, dass zwischen dem Achsrohr und dem Längslenker bzw. dessen Aufnahme eine den Kraftfluss berücksichtigende Abstützung realisiert ist.

Insbesondere bevorzugt weist der Ausgleichsabschnitt zumindest eine Trennfuge auf, welche zumindest zwei Endabschnitte formt, wobei jeder Endabschnitt zumindest einen Vorsprung aufweist, welcher sich im Wesentlichen entlang einer Umfangsrichtung des Achsrohrs erstreckt, und wobei zumindest zwei Vorsprünge derart ineinander greifen, dass ein Innenspalt und ein Außenspalt ausgebildet sind. Besonders bevorzugt weist der Längslenker eine Aufnahme auf, welche mit zwei Ausgleichsabschnitten mit je einer Trennfuge versehen ist.

Weitere Vorteile und Merkmale ergeben sich aus der nachfolgenden Beschreibung bevorzugter Ausführungsformen der erfindungsgemäßen Schale, der Verfahren und des erfindungsgemäßen Längslenkers mit Bezug auf die beigefügten Figuren. Einzelne Merkmale der einzelnen Ausführungsformen können dabei im Rahmen der Erfindung miteinander kombiniert werden.

Es zeigen:
- Figur 1a:: eine bevorzugte Ausführungsform eines Ausgleichsabschnitts mit zwei Stegen;
- Figur 1b:: eine bevorzugte Ausführungsform eines Ausgleichsabschnitts mit einem Zwischenbereich;
- Figur 2:: eine bevorzugte Ausführungsform eines Ausgleichsabschnitts mit zwei Vorsprüngen;
- Figur 3:: eine bevorzugte Ausführungsform eines Ausgleichsabschnitts mit einem durchgehenden Spalt;
- Figur 4a:: eine bevorzugte Ausführungsform eines Ausgleichsabschnitts mit einer Trennfuge und zwei Spalten;
- Figur 4b:: eine bevorzugte Ausführungsform eines Ausgleichsabschnitts mit einem Zwischenbereich und zwei Spalten;
- Figur 5a:: eine bevorzugte Ausführungsform einer Schale, angeordnet auf einem Achsrohr in einer Draufsicht;
- Figur 5b:: eine Ansicht der bevorzugten Ausführungsform der Schale, angeordnet auf dem Achsrohr, in einer Fahrzeug-Längsrichtung gesehen;
- Figur 6a:: eine perspektivische Ansicht einer bevorzugten Ausführungsform eines Längslenkers mit einer Aufnahme für ein Achsrohr;
- Figur 6b:: eine perspektivische Ansicht einer bevorzugten Ausführungsform eines Längslenker mit einer Aufnahme und einem Loch.

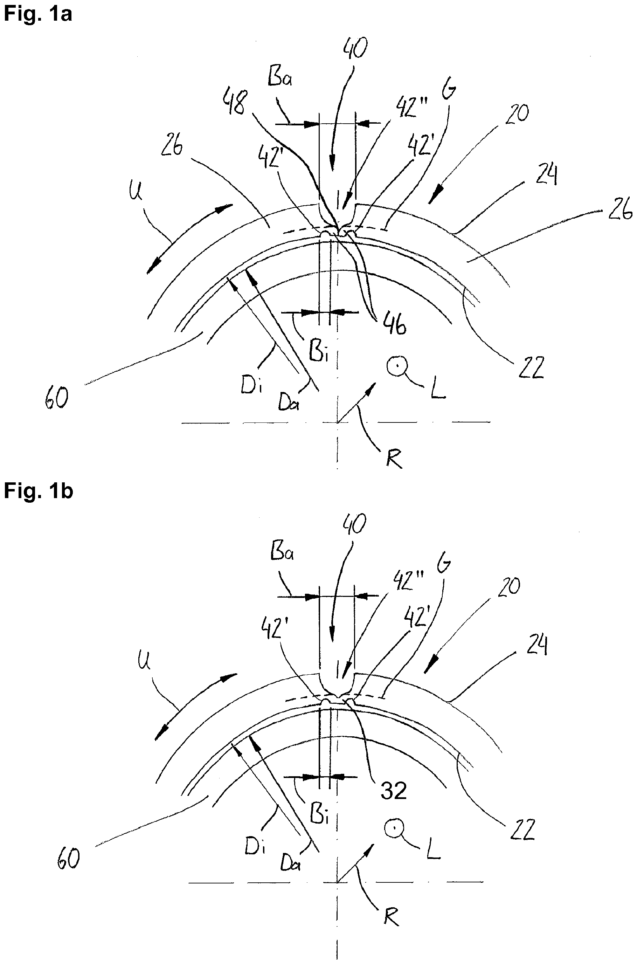

**Fig. 1a** zeigt eine bevorzugte Ausführungsform eines Ausgleichsabschnitts 40 mit einer Trennfuge 48. Zu beiden Seiten der Trennfuge 48 erstrecken sich in einer Umfangsrichtung U je zwei Stege 46, welche wiederum ebenfalls in Umfangsrichtung U neben jeweils einem Innenspalt 42' angeordnet sind. Im Wesentlichen in einer radialen Richtung gegenüber der Innenspalte 42' ist ein Außenspalt 42" an einer Außenkontur 24 angeordnet. Der Außenspalt 42" an der Außenkontur 24 weist im Wesentlichen in der Umfangsrichtung U gesehen eine Spaltbreite Ba auf, welche im Wesentlichen den Spaltbreiten Bi der Innenspalte 42' entspricht. Vorteilhafterweise kann die Spaltbreite Ba an der Außenkontur 24 auch derart größer als die Spaltbreiten Bi der Innenspalte 42' ausgebildet sein, damit bei einer voll zusammengedrückten Schale 20 ein ausreichender Platz für eine Kehlnaht in dem Außenspalt 42" der Außenkontur 24 bestehen bleibt. Über den Ausgleichsabschnitt 40 der Schale 20 ist ein Innendurchmesser Di der Schale 20 auf einen Außendurchmesser Da eines Achsrohrs 60 einstellbar. Durch die Anordnung und die Gestaltung der Stege 46 ist ein Grenzbereich G gebildet, welcher, sozusagen von der Außenkontur 24 in Richtung der Innenkontur 22 gesehen, eine Grenze darstellt, die für Fügemittel bzw. für ein Schweißbad oder dergleichen nicht passierbar ist. Mit Vorteil ist dadurch die Kerbwirkung auf das Achsrohr 60 bzw. ein zu hoher Wärmeeintrag in das Achsrohr 60 vermeidbar. Das Achsrohr 60 sowie die Schale 20 erstrecken sich im Wesentlichen entlang einer Längsachse L.

Bezüglich der **Fig. 1b** gilt das zur Fig. 1a Gesagte. Der Unterschied besteht allerdings darin, dass anstatt von zwei Stegen 46 an einer Innenkontur 22 ein Zwischenbereich 32 gebildet ist.

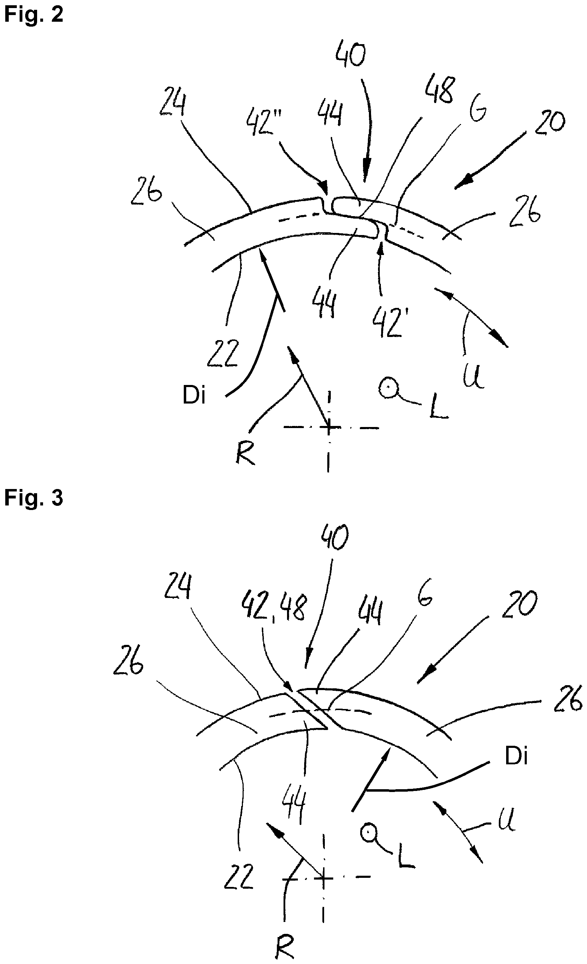

**Fig. 2** zeigt eine bevorzugte Ausführungsform eines Ausgleichsabschnitts 40 mit einer Trennfuge 48, welche eine Schale 20 in zwei Endabschnitte 26 teilt. Die Endabschnitte 26 formen je einen Vorsprung 44 aus, welche einen Grenzbereich G bilden. Die Vorsprünge 44 sowie der Grenzbereich G erstrecken sich im Wesentlichen entlang einer Umfangsrichtung U. An einer Außenkontur 24 und einer Innenkontur 22 ist je ein Spalt 42' und 42" ausgebildet, über welche ein Innendurchmesser Di der Schale 20 einstellbar ist.

**Fig. 3** zeigt eine bevorzugte Ausführungsform eines Ausgleichsabschnitts 40 mit einer Trennfuge 48, welche als durchgehender Spalt 42 zwischen einer Außenkontur 24 und einer Innenkontur 22 der Schale 20 ausgebildet ist. Der Spalt 42 erstreckt sich nicht im Wesentlichen parallel zu einer radialen Richtung R der Schale 20, sondern ist schräg zu dieser angeordnet. Obwohl bei dieser Ausführungsform ein durchgehender Spalt 42 zwischen der Außenkontur 24 und der Innenkontur 22 ausgebildet ist, ist durch die Form und Lage des Spalts 42 ein Grenzbereich G ausbildbar, welcher als Grenze für ein Fügemittel oder ein Schweißbad, welches von der Außenkontur 24 in die Richtung der Innenkontur 22 fließen könnte, wirkt. Wie bereits bekannt, ist ein Innendurchmesser Di der Schale 20 über den Spalt 42 einstellbar.

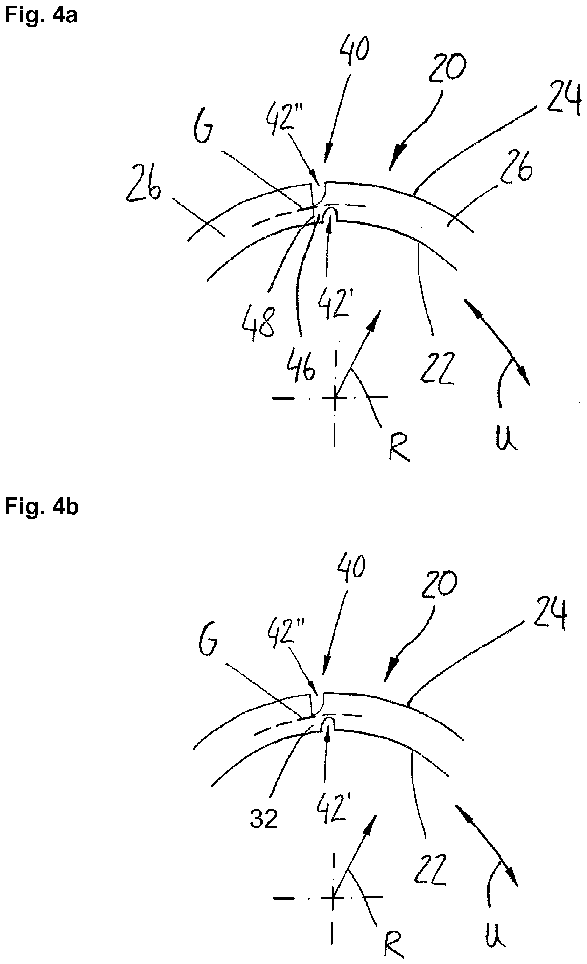

**Fig. 4a** zeigt eine bevorzugte Ausführungsform eines Ausgleichsabschnitts 40 mit einer Trennfuge 48, welche zwei Endabschnitte 26 ausbildet. An dem rechten Endabschnitt 26 ist an einer Innenkontur 22 ein Innenspalt 42' ausgebildet, welcher in einer Umfangsrichtung U gesehen neben einem Steg 46 angeordnet ist. Im Wesentlichen in einer radialen Richtung R zu dem Steg 46 bzw. zu dem Innenspalt 42' ist an einer Außenkontur 24 ein Außenspalt 42" angeordnet. Der Steg 46 bildet zusammen mit dem linken Endabschnitt 26 einen Grenzbereich G.

Für die **Fig. 4b** gilt das bereits zur Fig. 4a Gesagte. Ein Unterschied besteht darin, dass keine Trennfuge 48 vorhanden ist, sondern dass ein Zwischenbereich 32 an einer Innenkontur 22 ausgebildet ist.

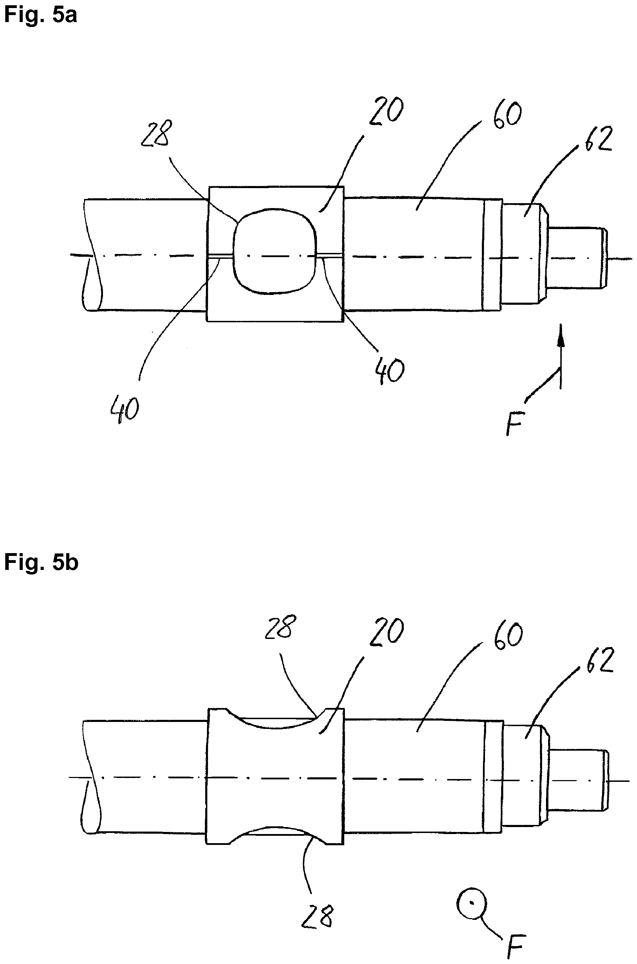

**Fig. 5a** zeigt eine bevorzugte Ausführungsform einer Schale 20, angeordnet auf einem Achsrohr 60, in einer Draufsicht. Die Schale 20 ist mit einem Loch 28 versehen, welches dazu dient, dass die Schale 20 an dem Achsrohr 60 über eine Lochschweißung anschweißbar ist. Im Wesentlichen quer zu einer Fahrtrichtung F erstrecken sich zwei Ausgleichsabschnitte 40, welche durch das Loch 28 sozusagen getrennt werden. Entlang der Ausgleichsabschnitte 40 bzw. deren Außenspalte 42" (in Fig. 5a nicht dargestellt) erfolgte bevorzugt die Verschweißung der Schale 20 in sich, nachdem sie sozusagen auf den idealen Innendurchmesser eingestellt wurde. In einer Längsachse L des Achsrohrs 60 ist ein Achsstummel 62 angeordnet.

**Fig. 5b** zeigt die aus Fig. 5a bevorzugte Ausführungsform der Schale 20 in einer Perspektive in Fahrtrichtung gesehen. Zu sehen ist, dass im Wesentlichen parallel zu einer horizontalen Ebene des Achsrohrs 60, an welchem der Achsstummel 62 angeordnet ist, die zwei Löcher 28 angeordnet sind.

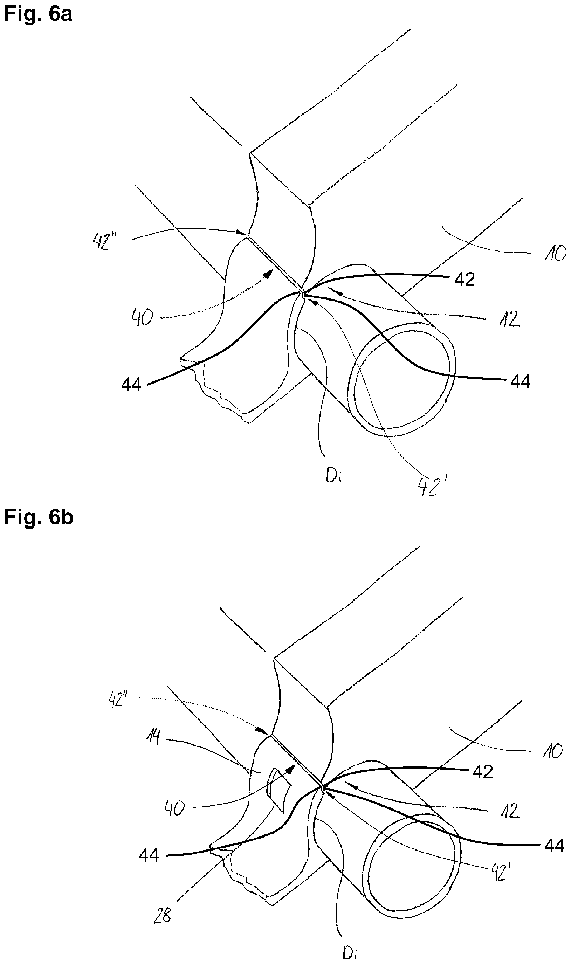

**Fig. 6a** zeigt eine perspektivische Ansicht einer bevorzugten Ausführungsform eines Längslenkers 10 mit einer Aufnahme 12. Die Aufnahme 12 ist mit einem Ausgleichsabschnitt 40 versehen, über welchen ein Innendurchmesser Di der Aufnahme 12 ideal an einen Außendurchmesser eines Achsrohrs (ohne Bezugszeichen) angepasst werden kann. Am Ausgleichsabschnitt 40 sind zwei Vorsprünge 44 ausgebildet, welche einen Innenspalt 42' und einen Außenspalt 42" ausbilden.

Der Innenspalt 42' und der Außenspalt 42" sind derart verbunden, dass ein durchgehenden Spalt 42 gebildet ist.

**Fig. 6b** zeigt eine perspektivische Ansicht einer bevorzugten Ausführungsform eines Längslenkers 10 mit einer Aufnahme 12 und einem Loch 28. Die Aufnahme 12 ist mit einem Ausgleichsabschnitt 40 versehen, über welchen ein Innendurchmesser Di der Aufnahme 12 ideal an einen Außendurchmesser eines Achsrohrs (ohne Bezugszeichen) angepasst werden kann. Die Aufnahme umfasst das Loch 28. Mit Vorteil dient beispielsweise das Loch 28 dazu, den Längslenker 10 auf dem Achsrohr zu verschweißen. Am Ausgleichsabschnitt 40 sind zwei Vorsprünge 44 ausgebildet, welche einen Innenspalt 42' und einen Außenspalt 42" ausbilden. Der Innenspalt 42' und der Außenspalt 42" sind derart verbunden, dass ein durchgehenden Spalt 42 gebildet ist.

### Bezugszeichenliste

- 10: Längslenker
- 12: Aufnahme
- 20: Schale
- 22: Innenkontur
- 24: Außenkontur
- 26: Endabschnitt
- 28: Loch
- 32: Zwischenbereich
- 40: Ausgleichsabschnitt
- 42: Spalt
- 42': Innenspalt
- 42": Außenspalt
- 44: Vorsprung
- 46: Steg
- 48: Trennfuge
- 60: Achsrohr
- 62: Achsstummel
- G: Grenzbereich
- Ba, Bi: Spaltbreiten
- Di: Innendurchmesser (Schale)
- Da: Außendurchmesser (Achsrohr)
- U: Umfangsrichtung
- L: Längsachse
- R: Radiale Richtung
- F: Fahrtrichtung

## Patentansprüche

1. Schale (20) zur Anbindung eines Längslenkers an ein Achsrohr,
mit einem im Wesentlichen rohrförmigen Querschnitt, welcher sich entlang einer Längsachse (L) erstreckt, und
welcher eine Außenkontur (24) und eine Innenkontur (22) aufweist,
wobei die Innenkontur (22) einen Innendurchmesser (Di) aufweist, und
wobei die Schale (20) zumindest einen Ausgleichsabschnitt (40) aufweist, welcher sich im Wesentlichen entlang der Längsachse (L) erstreckt,
wobei der zumindest eine Ausgleichsabschnitt (40) ausgelegt ist, durch unterschiedliche Einstellungen den Innendurchmesser (Di) zu verändern,
wobei der Ausgleichsabschnitt (40) durch jeweils zumindest einen Innenspalt (42'), welcher an der Innenkontur (22) angeordnet ist und/oder einen Außenspalt (42"), welcher an der Außenkontur (24) angeordnet ist, ausgelegt ist, den Innendurchmesser (Di) zu verändern,
wobei die Spalte (42', 42") im Wesentlichen entlang der Umfangsrichtung (U) der Schale (20) Spaltbreiten (Bi, Ba) aufweisen, und
wobei über eine Veränderung der Spaltbreiten (Bi, Ba) der Innendurchmesser (Di) veränderbar ist.

2. Schale (20) nach Anspruch 1,
wobei die Spaltbreite (Ba) des zumindest einen Außenspalts (42") im Wesentlichen der Spaltbreite (Bi) des zumindest einen Innenspalts (42') entspricht.

3. Schale (20) nach einem der vorhergehenden Ansprüche,
wobei der Ausgleichsabschnitt (40) zumindest eine Trennfuge (48) aufweist, welche sich im Wesentlichen entlang der Längsachse (L) erstreckt, und welche zumindest zwei Endabschnitte (26) an der Schale (20) formt.

4. Schale (20) nach Anspruch 3,
wobei jeder Endabschnitt (26) zumindest einen Vorsprung (44) aufweist,
welcher sich im Wesentlichen entlang der Umfangsrichtung (U) der Schale (20) erstreckt, und
wobei zumindest zwei Vorsprünge (44) derart ineinander greifen, dass der Innenspalt (42') und der Außenspalt (42") ausgebildet sind.

5. Schale (20) nach einem der vorhergehenden Ansprüche,
wobei der Ausgleichsabschnitt (44) zumindest einen Steg (46) an der Innenkontur (22) und/oder an der Außenkontur (24) ausbildet, und
wobei eine Breite des zumindest einen Stegs (46) in Umfangsrichtung (U) im Wesentlichen einer Spaltbreite (Bi, Ba) eines in Umfangsrichtung (U) neben dem Steg (46) angeordneten Spalts (42) entspricht.

6. Schale (20) nach Anspruch 5,
wobei der zumindest eine Steg (46) in Umfangsrichtung (U) angrenzend an den Innenspalt (42') oder den Außenspalt (42") angeordnet ist, und
wobei der zumindest eine Steg (46) zudem in radialer Richtung angrenzend an den Spalt (42) der jeweils gegenüberliegenden Kontur angeordnet ist.

7. Schale (20) nach einem der vorhergehenden Ansprüche,
wobei der Ausgleichsabschnitt zumindest einen Zwischenbereich (32) aufweist, und
wobei der Zwischenbereich (32) plastisch verformbar ist.

8. Schale (20) nach einem der Ansprüche 5-7,
wobei der Innendurchmesser (Di) durch ein plastisches Verformen des zumindest einen Stegs (46) oder des zumindest einen Zwischenbereichs (32) einstellbar ist.

9. Verfahren zur Herstellung eines Längslenker-Achsrohrverbundes, umfassend die Schritte:
- Bereitstellen einer Schale (20);
- Bereitstellen eines Achsrohrs (60);
- Bereitstellen eines Längslenkers;
- Aufschieben der Schale (20) auf das Achsrohr (60) und Positionieren der Schale (20) entlang einer Längsrichtung des Achsrohrs (60);
- Betätigen zumindest eines Ausgleichsabschnitts (40) der Schale (20) durch eine Einstellkraft, welche im Wesentlichen entlang einer Umfangsrichtung (U) der Schale (20) gerichtet ist und Anpassen eines Innendurchmessers (Di) der Schale (20) an einen Außendurchmesser (Da) des Achsrohrs (60) dadurch;
- Verschweißen der Schale (20) entlang des zumindest einen Ausgleichsabschnitts (40);
- Verschweißen der Schale (20) mit dem Achsrohr (60).

10. Verfahren nach Anspruch 9, zusätzlich umfassend die Schritte:
- Drehen der Schale (20), bis ein Loch (28) der Schale (20) in einer vertikalen Richtung auf dem Achsrohr (60) angeordnet ist;
- Verschweißen der Schale (20) entlang eines Außenspalts (42") der Schale (20);
- Verschweißen der Schale (20) mit dem Achsrohr (60) zumindest bereichsweise entlang einer Innenkontur des Lochs (28) der Schale (20);
- Positionieren des Längslenkers auf der Schale (20).

11. Verfahren zur Herstellung eines Längslenker-Achsrohrverbundes, umfassend die Schritte:
- Bereitstellen einer Schale (20);
- Bereitstellen eines Achsrohrs (60);
- Bereitstellen eines Längslenkers;
- Betätigen zumindest eines Ausgleichsabschnitts (40) der Schale (20) durch Positionieren der Schale (20) auf dem Achsrohr (60);
- Verschweißen der Schale (20) entlang des zumindest eines Ausgleichsabschnitts (40);
- Verschweißen der Schale (20) mit dem Achsrohr (60).

12. Verfahren nach Anspruch 11, zusätzlich umfassend den Schritt:
- Anordnen der Schale (20) in einer Aufnahme des Längslenkers.

13. Längslenker (10) für eine Fahrzeugsachse,
mit einer Aufnahme (12), insbesondere für ein Achsrohr,
wobei die Aufnahme (12) einen Innendurchmesser (Di) aufweist, und
wobei die Aufnahme (12) zumindest einen Ausgleichsabschnitt (40) aufweist,
wobei der zumindest eine Ausgleichsabschnitt (40) ausgelegt ist, durch unterschiedliche Einstellungen den Innendurchmesser (Di) zu verändern,
wobei der Ausgleichsabschnitt (40) durch jeweils zumindest einen Innenspalt (42'), welcher an der Innenkontur (22) angeordnet ist und/oder einen Außenspalt (42"), welcher an der Außenkontur (24) angeordnet ist, ausgelegt ist, den Innendurchmesser (Di) zu verändern,
wobei die Spalte (42', 42") im Wesentlichen entlang der Umfangsrichtung (U) der Schale (20) Spaltbreiten (Bi, Ba) aufweisen, und
wobei über eine Veränderung der Spaltbreiten (Bi, Ba) der Innendurchmesser (Di) veränderbar ist.

14. Längslenker (10) nach Anspruch 13,
wobei der Ausgleichsabschnitt (40) zumindest eine Trennfuge (48) aufweist, welche zumindest zwei Endabschnitte (26) formt,
wobei jeder Endabschnitt (26) zumindest einen Vorsprung (44) aufweist, welcher sich im Wesentlichen entlang einer Umfangsrichtung (U) des Achsrohrs erstreckt, und
wobei zumindest zwei Vorsprünge (44) derart ineinander greifen, dass ein Innenspalt (42') und ein Außenspalt (42") ausgebildet sind.

## Claims

1. Wrap (20) for attaching a trailing arm to an axle tube,
having an essentially tubular cross section which extends along a longitudinal axis (L), and
which has an outer contour (24) and an inner contour (22),
wherein the inner contour (22) has an internal diameter (Di), and
wherein the wrap (20) has at least one compensating portion (40) which extends essentially along the longitudinal axis (L),
wherein the at least one compensating portion (40) is designed to alter the internal diameter (Di) by way of different adjustments,
wherein the compensating portion (40) is designed to alter the internal diameter (Di) by way of in each case at least one inner gap (42'), which is arranged on the inner contour (22), and/or an outer gap (42"), which is arranged on the outer contour (24),
wherein the gaps (42', 42") have gap widths (Bi, Ba) essentially along the circumferential direction (U) of the wrap (20), and
wherein the internal diameter (Di) can be altered by virtue of the gap widths (Bi, Ba) being altered.

2. Wrap (20) according to Claim 1,
wherein the gap width (Ba) of the at least one outer gap (42") corresponds essentially to the gap width (Bi) of the at least one inner gap (42').

3. Wrap (20) according to one of the preceding claims,
wherein the compensating portion (40) has at least one separating joint (48), which extends essentially along the longitudinal axis (L), and which forms at least two end portions (26) on the wrap (20).

4. Wrap (20) according to Claim 3,
wherein each end portion (26) has at least one protrusion (44), which extends essentially along the circumferential direction (U) of the wrap (20), and
wherein at least two protrusions (44) engage one inside the other to form the inner gap (42') and the outer gap (42").

5. Wrap (20) according to one of the preceding claims,
wherein the compensating portion (44) forms at least one crosspiece (46) on the inner contour (22) and/or on the outer contour (24), and
wherein a width of the at least one crosspiece (46) in the circumferential direction (U) corresponds essentially to a gap width (Bi, Ba) of a gap (42) arranged alongside the crosspiece (46) in the circumferential direction (U).

6. Wrap (20) according to Claim 5,
wherein the at least one crosspiece (46) is adjacent to the inner gap (42') or the outer gap (42") in the circumferential direction (U), and
wherein the at least one crosspiece (46), in addition, is radially adjacent to the gap (42) of the respectively opposite contour.

7. Wrap (20) according to one of the preceding claims,
wherein the compensating portion has at least one intermediate region (32), and
wherein the intermediate region (32) is plastically deformable.

8. Wrap (20) according to one of Claims 5-7,
wherein the internal diameter (Di) can be adjusted by plastic deformation of the at least one crosspiece (46) or of the at least one intermediate region (32).

9. Method of producing a trailing-arm/axle-tube assembly, comprising the following steps:
- providing a wrap (20);
- providing an axle tube (60);
- providing a trailing arm;
- pushing the wrap (20) onto the axle tube (60) and positioning the wrap (20) along a longitudinal direction of the axle tube (60);
- actuating at least one compensating portion (40) of the wrap (20) by way of an adjustment force directed essentially along a circumferential direction (U) of the wrap (20) and adapting an internal diameter (Di) of the wrap (20) to an external diameter (Da) of the axle tube (60) as a result;
- welding the wrap (20) along the at least one compensating portion (40);
- welding the wrap (20) to the axle tube (60).

10. Method according to Claim 9, additionally comprising the following steps:
- rotating the wrap (20) until a hole (28) of the wrap (20) is arranged in a vertical direction on the axle tube (60);
- welding the wrap (20) along an outer gap (42") of the wrap (20);
- welding the wrap (20) to the axle tube (60) at least in certain regions along an inner contour of the hole (28) of the wrap (20);
- positioning the trailing arm on the wrap (20).

11. Method of producing a trailing-arm/axle-tube assembly, comprising the following steps:
- providing a wrap (20);
- providing an axle tube (60);
- providing a trailing arm;
- actuating at least one compensating portion (40) of the wrap (20) by positioning the wrap (20) on the axle tube (60);
- welding the wrap (20) along the at least one compensating portion (40);
- welding the wrap (20) to the axle tube (60).

12. Method according to Claim 11, additionally comprising the following step:
- arranging the wrap (20) in a mount of the trailing arm.

13. Trailing arm (10) for a vehicle axle,
having a mount (12), in particular for an axle tube, wherein the mount (12) has an internal diameter (Di), and
wherein the mount (12) has at least one compensating portion (40),
wherein the at least one compensating portion (40) is designed to alter the internal diameter (Di) by way of different adjustments,
wherein the compensating portion (40) is designed to alter the internal diameter (Di) by way of in each case at least one inner gap (42'), which is arranged on the inner contour (22), and/or an outer gap (42"), which is arranged on the outer contour (24),
wherein the gaps (42', 42") have gap widths (Bi, Ba) essentially along the circumferential direction (U) of the wrap (20), and
wherein the internal diameter (Di) can be altered by virtue of the gap widths (Bi, Ba) being altered.

14. Trailing arm (10) according to Claim 13,
wherein the compensating portion (40) has at least one separating joint (48), which forms at least two end portions (26),
wherein each end portion (26) has at least one protrusion (44), which extends essentially along a circumferential direction (U) of the axle tube, and
wherein at least two protrusions (44) engage one inside the other to form an inner gap (42') and an outer gap (42").

## Revendications

1. Coque (20) pour le montage d'un longeron sur un tube d'essieu, présentant une section transversale de forme sensiblement tubulaire qui s'étend le long d'un axe longitudinal (L), et présentant un contour extérieur (24) et un contour intérieur (22), dans laquelle le contour intérieur (22) a un diamètre intérieur (Di), et la coque (20) comprend au moins une portion de compensation (40) qui s'étend sensiblement le long de l'axe longitudinal (L), dans laquelle ladite au moins une portion de compensation (40) est conçue pour modifier le diamètre intérieur (Di) grâce à des réglages différents, dans laquelle la portion de compensation (40) est conçue respectivement par au moins un intervalle intérieur (42') agencé sur le contour intérieur (22) et/ou par un intervalle extérieur (42") agencé sur le contour extérieur (24) afin de modifier le diamètre intérieur (Di),
dans laquelle les intervalles (42', 42") présentent des largeurs d'intervalle (Bi, Ba) sensiblement le long de l'direction périphérique (U) de la coque (20), et
dans laquelle le diamètre intérieur (Di) est modifiable par une modification des largeurs d'intervalle (Bi, Ba).

2. Coque (20) selon la revendication 1,
dans laquelle la largeur d'intervalle (Ba) dudit au moins un intervalle extérieur (42") correspond sensiblement à la largeur d'intervalle (Bi) dudit au moins un intervalle intérieur (42').

3. Coque (20) selon l'une des revendications précédentes,
dans laquelle la portion de compensation (40) comporte au moins un joint de séparation (48), qui s'étend sensiblement le long de l'axe longitudinal (L) et qui forme au moins deux portions terminales (26) sur la coque (20).

4. Coque (20) selon la revendication 3,
dans laquelle chaque portion terminale (26) comprend au moins une saillie (44) qui s'étend sensiblement le long de la direction périphérique (U) de la coque (20), et
dans laquelle au moins deux saillies (44) s'engagent l'une dans l'autre de telle façon que l'intervalle intérieur (42') et l'intervalle extérieur (42") sont réalisés.

5. Coque (20) selon l'une des revendications précédentes,
dans laquelle la portion de compensation (44) forme au moins une âme (46) sur le contour intérieur (22) et/ou sur le contour extérieur (24), et
dans laquelle une largeur de ladite au moins une âme (46) en direction périphérique (U) correspond sensiblement à une largeur d'intervalle (Bi, Ba) d'un intervalle (42) agencé en direction périphérique (U) à côté de l'âme (46).

6. Coque (20) selon la revendication 5,
dans laquelle ladite au moins une âme (46) est agencée, en direction périphérique (U) de manière adjacente à l'intervalle intérieur (42') ou à l'intervalle extérieur (42"), et
dans laquelle ladite au moins une âme (46) est agencée en direction radiale de manière adjacente à l'intervalle (42) du contour respectivement opposé.

7. Coque (20) selon l'une des revendications précédentes,
dans laquelle la portion de compensation comprend au moins une zone intermédiaire (32), et
dans laquelle la zone intermédiaire (32) est déformable plastiquement.

8. Coque (20) selon l'une des revendications 5 à 7, dans laquelle le diamètre intérieur (Di) est réglable par déformation plastique de ladite au moins une âme (46) ou de ladite au moins une zone intermédiaire (32).

9. Procédé pour la réalisation d'un assemblage formé d'un longeron et d'un tube d'essieu, incluant les étapes consistant à :
- mettre à disposition une coque (20) ;
- mettre à disposition un tube d'essieu (60) ;
- mettre à disposition un longeron ;
- enfiler la coque (20) sur le tube d'essieu (60) et positionner la coque (20) le long d'une direction longitudinale du tube d'essieu (60) ;
- actionner au moins une portion de compensation (40) de la coque (20) par une force de réglage, orientée sensiblement le long d'une direction périphérique (U) de la coque (20) est adapter grâce à cela un diamètre intérieur (Di) de la coque (20) à un diamètre extérieur (Da) du tube d'essieu (60) ;
- souder la coque (20) le long de ladite au moins une portion de compensation (40) ;
- souder la coque (20) avec le tube d'essieu (60).

10. Procédé selon la revendication 9, comprenant en supplément les étapes consistant à :
- faire tourner la coque (20) jusqu'à ce qu'un trou (28) de la coque (20) soit agencé dans une direction verticale sur le tube d'essieu (60) ;
- souder la coque (20) le long d'un intervalle extérieur (42") de la coque (20) ;
- souder la coque (20) avec le tube d'essieu (60) au moins localement le long d'un contour intérieur du trou (28) de la coque (20) ;
- positionner le longeron sur la coque (20).

11. Procédé pour la fabrication d'un assemblage formé d'un longeron et d'un tube d'essieu, incluant les étapes consistant à :
- mettre à disposition une coque (20) ;
- mettre à disposition un tube d'essieu (60) ;
- mettre à disposition un longeron ;
- actionner au moins une portion de compensation (40) de la coque (20) en positionnant la coque (20) sur le tube d'essieu (60) ;
- souder la coque (20) le long de ladite au moins une portion de compensation (40) ;
- souder la coque (20) avec le tube d'essieu (60).

12. Procédé selon la revendication 11, incluant en supplément l'étape consistant à :
- agencer la coque (20) dans un logement récepteur du longeron.

13. Longeron (10) pour un essieu de véhicule,
comprenant un logement récepteur (12), en particulier pour un tube d'essieu, dans lequel le logement récepteur (12) présente un diamètre intérieur (Di), et
dans lequel le logement récepteur (12) comprend au moins une portion de compensation (40),
dans lequel ladite au moins une portion de compensation (40) est conçue pour modifier le diamètre intérieur (Di) par des réglages différents,
dans lequel la portion de compensation (40) est conçue pour modifier le diamètre intérieur (Di) par respectivement au moins un intervalle intérieur (42') agencé sur le contour intérieur (22) et/ou par un intervalle extérieur (42") agencé sur le contour extérieur (24),
dans lequel les intervalles (42', 42") présentent des largeurs d'intervalle (Bi, Ba) sensiblement le long de la direction périphérique (U) de la coque (20), et
dans lequel le diamètre intérieur (Di) est modifiable par une modification des largeurs d'intervalle (Bi, Ba).

14. Longeron (10) selon la revendication 13,
dans lequel la portion de compensation (40) comprend au moins un joint de séparation (48) qui forme au moins deux portions terminales (26),
dans lequel chaque portion terminale (26) comprend au moins une saillie (44) qui s'étend sensiblement le long d'une direction périphérique (U) du tube d'essieu, et
dans lequel au moins deux saillies (44) s'engagent l'une dans l'autre de telle façon qu'il se forme un intervalle intérieur (42') et un intervalle extérieur (42").
